# EUROPEAN PATENT APPLICATION

(11) **EP 1 096 756 A1**
(43) Date of publication of application: **02.05.2001**
(21) Application number: 99402704.3
(22) Date of filing: 29.10.1999
(51) Int. Cl.: H04L 29/06

(54) **Method for service differentiation in PPP protocol**

(71) Applicant: ALCATEL, 75008 Paris (FR)
(72) Inventor: De Schrijver, Peter Paul Camille, 3001 Heverlee (BE); T'Joens, Yves Robert Fernand, 8200 Sint Michiels-Brugge (BE); Zaccone, Carmelo K.S., 6200 Chatelet (BE)
(74) Representative: Narmon, Gisèle Marie Thérèse

(57) **Abstract**

Network terminations (H1, H2, H3) mark packets of a Point-to-Point Protocol stream (PPP_str1, PPP_str2, PPP_str3) with a type-of-service indication indicative for the quality of service desired for transfer of this Point-to-Point Protocol stream (PPP_str1, PPP_str2, PPp_str3). The type-of-service indication is used in multiplexing network points (NAS) to schedule transport of packets of different Point-to-Point Protocol packet streams (PPP_str1, PPP_str2, PPP_str3) based on priorities associated with the type-of-service indications thereof.

To mark the packets with a type-of-service indication, a type-of-service field may be added to the packets, or the existing protocol identification field may be used.

## Description

The present invention relates to a Point-to-Point Protocol aware network termination as defined in the non-characteristic part of claim 1, a Point-to-Point Protocol aware multiplexing network element as defined in the non-characteristic part of claim 9, and a method for service differentiation in a Point-to-Point Protocol network as defined in the non-characteristic part of claim 13.

Such Point-to-Point protocol aware network elements are already known in the art, e.g. from *the IETF* (Internet *Engineering Task Force) standard* contribution entitled *'The Pont-to-Point Protocol (PPP)' from the author W. Simpson. This standard* contribution *is referred to by rfc1661 and can be retrieved from the internet via URL 'http://www.cis.ohio-state,edu/htbin/rfc/rfc 1661.html'*. The Point-to-Point Protocol, which is described in detail in the just mentioned standard contribution, provides a method for transporting datagrams of different network-layer protocols simultaneously over the same link by encapsulating these datagrams in the information field of PPP (Point-to-Point Protocol) packets and by specifying the network-layer protocols of these datagrams in the protocol identification field of the PPP packets. As can be seen from the figure on [page 3] of the IETF contribution rfc 1661, a PPP packet in addition to the protocol identification field and the information field also contains a padding field that can contain an additional arbitrary number of octets. In order to be sufficiently versatile to be portable to a wide variety of environments, the Point-to-Point Protocol further provides a link control protocol that is used to automatically agree upon encapsulation format options and other optional facilities like authentication. In case a number of PPP packet streams have to be multiplexed onto a shared transmission medium, all PPP packet streams will be tunnelled in the same way over the shared transmission medium since there is no way to give different PPP packet streams different priorities. It is for example impossible to give real time data like voice encapsulated in a first PPP packet stream a higher priority than non real time data in another PPP packet stream. A consequence thereof is that quality of service guarantees negotiated and guaranteed at a higher layer, for instance the IP (Internet Protocol) layer or ATM (Asynchronous Transfer Mode) layer, may not be met unless the PPP multiplexing point violates protocol layering by looking in the higher layer protocol, searching for example the IP DS (Internet Protocol DiffServ) codepoint or the ATM service class indication.

An object of the present invention is to provide Point-to-Point Protocol aware network elements such as the above known, but having the capability to handle different PPP packet streams that have to be multiplexed on a shared transmission medium with different priorities, thereby enabling service differentiation without the necessity to look inside higher layer protocols.

According to the invention, this object is achieved by the Point-to-Point Protocol aware network termination defined by claim 1, the Point-to-Point Protocol aware multiplexing network element defined by claim 9, and the method for service differentiation in a Point-to-Point Protocol network defined by claim 13.

Indeed, if the PPP aware network terminations or originators of PPP packet streams mark the PPP packets with a type-of-service indication indicative for the desired quality of service, the PPP multiplexing points can look at this type-of-service indication to schedule the different PPP packet streams with different priorities. Introduction of service differentiation at the PPP layer by marking PPP packets with a type-of-service indication implies the need for traffic management at the PPP layer but allows to transport real time traffic such as voice with better delay and jitter characteristics in access networks.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

An additional feature of the Point-to-Point Protocol aware network termination according to the present invention is defined by claim 2.

Thus, a protocol identifier may be reserved to indicate the presence of a type-of-service field. The type-of-service field may immediately follow the protocol identification field and carries the type-of-service indication indicative for the desired priority. This way of adding a type-of-service indication is compatible with the existing technology. The protocol identifier indicating the network layer protocol of the datagram encapsulated in the PPP packet can be embedded in a second protocol identification field following the type-of-service field. A Point-to-Point aware multiplexing network element according to the present invention able to handle the PPP packets marked as defined by claim 2, is described in claim 10. A Point-to-Point aware network termination according to the present invention able to negotiate the option of marking the PPP packets as defined by claim 2, is described in claim 6.

As a first alternative for claim 2, an additional feature of the Point-to-Point Protocol aware network termination according to the present invention is defined by claim 3.

In this way, only a type-of-service field carrying the type-of service indication is added to the PPP packets. This type-of-service field may for example precede the protocol identification field of currently standardised PPP packets. This way of adding a type-of-service indication minimises the required additional overhead to mark PPP packets with a type-of-service indication but is not backwards compatible with the existing technology. A Point-to-Point aware multiplexing network element according to the present invention able to handle the PPP packets marked as defined by claim 3, is described in claim 11. A Point-to-Point aware network termination according to the present invention able to negotiate the option of marking the PPP packets as defined by claim 3, is described in claim 7.

As a second alternative for claim 2, an additional feature of the Point-to-Point Protocol aware network termination according to the present invention is defined by claim 4.

Thus, a set of protocol identifiers can be reserved and can be allocated to different qualities of service. The protocol identifier then is not only indicative for the network layer protocol of the datagram encapsulated in the PPP packet but also for the desired quality of service. In other words, protocol identification and type-of-service identification are integrated according to this embodiment of the present invention. This way of marking PPP packets with type-of-service indications is compatible with existing technology but is very protocol identifier space consuming, since a protocol identifier has to be allocated to each combination of network layer protocol and desired quality of service. A Point-to-Point aware multiplexing network element according to the present invention able to handle the PPP packets marked as defined by claim 4, is described in claim 12. A Point-to-Point aware network termination according to the present invention able to negotiate the option of marking the PPP packets as defined by claim 4, is described in claim 8.

The above mentioned and other objects and features of the invention will become more apparent and the invention itself will be best understood by referring to the following description of an embodiment taken in conjunction with the accompanying drawings, wherein:
Fig. 1 represents an access network ACCESS NETWORK comprising PPP aware network terminations or hosts H1, H2, and H3 according to the present invention, and a PPP aware multiplexing network element or Network Access Server NAS according to the present invention;
Fig. 2 shows a PPP packet transferred in a known PPP based access network;
Fig. 3 shows a PPP packet transferred in a first embodiment of the access network ACCESS NETWORK of Fig. 1;
Fig. 4 shows a PPP packet transferred in a second embodiment of the access network ACCESS NETWORK of Fig. 1; and
Fig. 5 shows a PPP packet transferred in a third embodiment of the access network ACCESS NETWORK of Fig. 1.

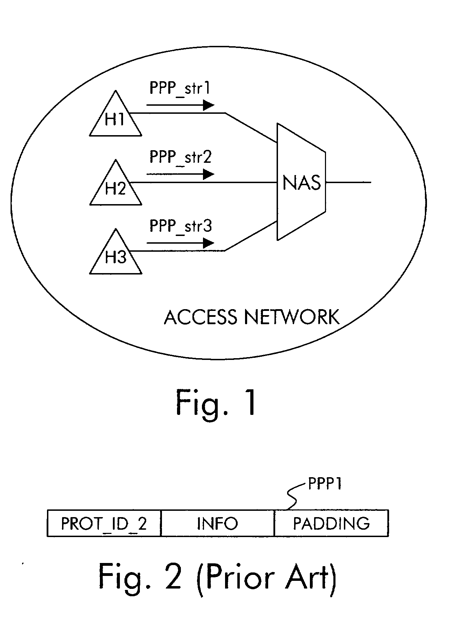

The access network ACCESS NETWORK of Fig. 1 contains three hosts H1, H2 and H3, coupled via respective links to an internet Network Access Server NAS. The hosts H1, H2 and H3 send IP (Internet Protocol) datagrams encapsulated in PPP (Point-to-Point Protocol) packets to the Network Access Server NAS. The PPP packet streams PPP_str1, PPP_str2 and PPP_str3 transmitted respectively by the first, second and third host H1, H2 and H3, are multiplexed by the Network Access Server NAS onto a shared outgoing link. Since the principles of the present invention can be explained by means of the very simple access network configuration drawn in Fig. 1, the remainder of the network as well as the destinations of the PPP packet streams PPP_str1, PPPP_str2 and PPP_str3 are not drawn.

If the hosts H1, H2 and H3 in Fig. 1 would generate PPP packet streams in accordance with the currently existing standards, each PPP packet in the packet streams PPP str1, PPP_str2 and PPP_str3 would have a structure like the PPP Packet PPP1 drawn in Fig. 2. This PPP packet PPP1 consists of three fields: a protocol identification field containing an identification PACT_ID_2 of the network layer protocol, i.e. the Internet Protocol, of the datagram encapsulated in the PPP packet PPP1; an information field containing data INFO, i.e. IP datagrams; and a padding field containing an arbitrary number of padding octets PADDING. As already explained in the introductory part of this patent applications, the Network Access Server NAS would not be able to handle the PPP packet streams PPP_str1, PPP_str2 and PPP_str3 with different priorities if the PPP packets in these streams would look like the PPP packet PPP1 of Fig. 2.

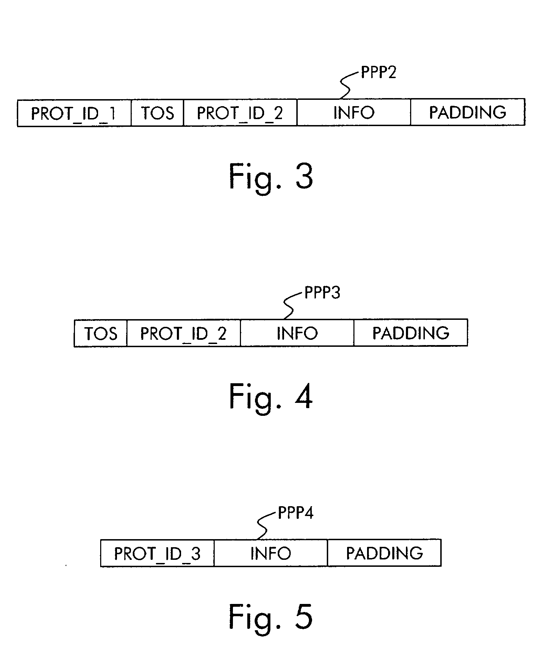

The hosts H1, H2 and H3 as well as the Network Access Server NAS of Fig. 2 however support marking the PPP packets with a type-of-service indication. The PPP packets generated by the hosts H1, H2 and H3 have a structure equal to that of PPP packet PPP2 depicted in Fig. 3. The PPP packet PP2 in a first protocol identification field, that has the same size as the protocol identification field of PPP packet PPP1, carries a reserved protocol identifier PROT_ID1 indicating that this first protocol identification field is followed by a type-of-service field wherein a type-of-service indication TOS is embedded. The type-of-service indication TOS is indicative for the desired quality of service and is supposed to be different for the three PPP packet streams PPP_str1, PPP_str2 and PPP_str3. The Network Access Server NAS will recognise the reserved protocol identifier PROT_ID1 in the first protocol identification field and will thereupon look at the type-of-service indication TOS in the type-of-service field. Based on the value of the type-of-service indications it retrieves from the PPP packets in the PPP packet streams PPP_str1, PPP_str2 and PPP_str3, and a certain priority based traffic management scheme, the Network Access Server will multiplex the streams onto the outgoing link. In addition to the first protocol identification field and type-of-service field, the PPP packet PPP2 drawn in Fig. 2 contains the three fields of a traditional PPP packet: a protocol identification field containing the identification PROT_ID_2 of the network layer protocol, i.e. the Internet Protocol, of the datagram encapsulated in the PPP packet PPP2; an information field containing the data INFO, i.e. the IP datagrams; and a padding field containing an arbitrary number of padding octets PADDING. The contents of these fields is equal to the contents of the equivalent fields of the PPP packet PPP1 drawn in Fig. 2. In case one of the hosts H1, H2 or H3 would not be able to generate PPP packets having the structure of PPP packet PPP2, the working of the Network Access Server NAS would not fail at the moment it receives PPP packets from this host. The PPP packets from such a host would have a structure equal to that of the PPP packet PPP1 drawn in Fig. 2. Upon receipt thereof, the Network Access Server would analyse the protocol identification field and would retrieve therefrom immediately the protocol identifier PROT_ID_2 indicative for the network layer protocol of the encapsulated datagrams, and could treat such PPP packets with a default priority as there is no indication for the desired quality of service. The Network Access Server NAS is thus backwards compatible with the existing PPP standard.

Before transmitting PPP packets, the hosts H1, H2 and H3 check whether the Network Access Server NAS is able to handle PPP packets with a structure equal to that of the PPP packet PP2 drawn in Fig. 3. This can be established in the link control protocol (LCP) which, as already mentioned in the introduction of this patent application, enables the PPP aware network elements to check which options are supported. The hosts H1, H2 and H3 also have to negotiate with the Network Access Server NAS the range of values for the type-of-service indication TOS that will be accepted. This negotiation can take into account the capabilities of the Network Access Server NAS as well as its policy. Negotiating the range of acceptable type-of-service indicator values can be done via a type-of-service control protocol (ToSCP) according to which traditional PPP packets are transferred with a thereto reserved protocol identifier in their protocol identification field. These packets contain he byte stream of allowed type-of-service indicator values for a PPP session.

In an alternative embodiment of the access network ACCESS NETWORK, still according to the present invention, the hosts H1, H2 and H3 generate PPP packet streams PPP_str1, PPP_str2 and PPP_str3 wherein the PPP packets have a structure equal to that of PPP packet PPP3 drawn in Fig. 4. In this PPP packet PP3, the tradition three fields, the protocol identification field with network layer protocol identifier PROT_ID_2, the information field with the data INFO, and the padding field with the padding bits PADDING are preceded only by a type-of-service field carrying the type-of-service indicator TOS indicative for the desired quality of service for transferring the PPP packet PPP3. The Network Access Server NAS in this alternative version of the access network ACCESS NETWORK immediately looks for the type-of-service indication TOS in the type-of-service field and will schedule treatment of the PPP packets in the PPP packet streams PPP_str1, PPP_str2 and PPP_str3 on the basis of the retrieved type-of-service indication values. A host which is not able to produce PPP packets with a structure equal to that of PPP packet PPP3 but still produces PPP packets with the traditional structure outlined in Fig. 2 will not be understood by the Network Access Server NAS or will be treated wrongly thereby as the Network Access Server will interpret part of the protocol identification bits PACT_ID_2 as a type-of-service indication value. This alternative implementation of the present invention in other words is not backwards compatible with the existing technology. It is evident that in this alternative embodiment of the access network ACCESS NETWORK, the hosts H1, H2 and H3 and the Network Access Server NAS also have to negotiate the range of acceptable type-of-service indication values before any PPP session is set up. This negotiation procedure can be performed similarly as described above for the first implementation.

In a second alternative embodiment of the access network ACCESS NETWORK the hosts H1, H2 and H3 generate PPP packet streams PPP_str1, PPP_str2 and PPP_str3 whose PPP packets have a structure equal to that of PPP packet PPP4 drawn in Fig. 5. This PPP packet PP5 has exactly the same structure as the traditional PPP packet of Fig. 2, i.e. a protocol identification field followed by an information field followed by a padding field. In the protocol identification field, the originating host now embeds a protocol identifier PACT_ID_3 indicative for both the network layer protocol of the encapsulated datagrams and the desired quality of service. This protocol identifier PACT_ID_3 is taken from a set of protocol identifiers that is reserved and allocated to pair-wise combinations of a network layer protocol and desired quality of service. The allocation is known by the hosts H1, H2 and H3 as well as by the Network Access Server NAS so that the latter Network Access Server NAS upon retrieval of the protocol identifier can determine the network layer protocol of the encapsulated datagrams and can schedule handling of the received PPP packet in accordance to the desired quality of service. A host that is not aware of the reserved set of protocol identifiers, will generate traditional PPP packets, having the structure of PPP packet PPP1 of Fig. 2 and having in its protocol identification field a protocol identifier that is only indicative for the network layer protocol of the encapsulated datagrams. Such PPP packets will be handled correctly by the Network Access Server NAS so that the this second alternative implementation is also backwards compatible with existing technology. Again, the acceptable range of type-of-service indication values may be negotiated before any PPP session is set up in a way as described above.

Although in the above described embodiments, the datagrams encapsulated in the PPP packets are IP (Internet Protocol) datagrams, and the access network ACCESS NETWORK is supposed to be an internet access network, applicability of the current invention is not limited to the internet environment. The Point-to-Point Protocol enables transport of multi-protocol datagrams over point-to-point links in any communication network, and the network layer protocol (IP, IPX, AppleTalk, ATM, ...) for obvious reasons does not limit the applicability of the current invention.

Another remark is that although only the Network Access Server NAS has been drawn in Fig. 1 and has been discussed above, any skilled person will appreciate that the PPP packets marked with a type-of-service indication in accordance to the present invention should be scheduled according to their type-of-service indications by all PPP multiplexing points along the path they travel to their destinations.

Furthermore, it is remarked that an embodiment of the present invention is described above rather in terms of functional blocks. From the functional description of these blocks it will be obvious for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention.

## Claims

1. Point-to-Point Protocol aware network termination (H1) able to transmit a Point-to-Point Protocol packet stream (PPP_str1),
CHARACTERISED IN THAT said network termination (H1) comprises packet marking means to mark packets of said Point-to-Point Protocol packet stream (PPP_str1) with type-of-service information indicative for a quality of service desired for transfer of said Point-to-Point Protocol packet stream (PPP_str1).

2. Point-to-Point Protocol aware network termination (H1) according to claim 1,
CHARACTERISED IN THAT said packet marking means comprises:
a. means to associate a type-of-service indication (TOS) with said quality of service desired;
b. means to insert a first reserved protocol identifier (PROT_ID_1) in a protocol identification field of each packet (PPP2) of said Point-to-Point Protocol packet stream (PPP_str1);
c. means to add a type-of-service field to each said packet (PPP2);
d. means to insert said type-of-service indication (TOS) in said type-of-service field of each said packet (PPP2); and
e. means to add an additional protocol identification field to each said packet (PPP2) for identification of the network-layer protocol (PROT_ID_2) of datagrams (INFO) encapsulated in said packet (PPP2).

3. Point-to-Point Protocol aware network termination (H1) according to claim 1,
CHARACTERISED IN THAT said packet marking means comprises:
a. means to associate a type-of-service indication (TOS) with said quality of service desired;
b. means to add a type-of-service field to each packet (PPP3) of said Point-to-Point Protocol packet stream (PPP_str1); and
c. means to insert said type-of-service indication (TOS) in said type-of-service field of each said packet (PPP3).

4. Point-to-Point Protocol aware network termination (H1) according to claim 1,
CHARACTERISED IN THAT said packet marking means comprises:
a. means to select a protocol identifier (PROT_ID_3) out of a predefined set of protocol identifiers associated with respective qualities of service and respective network layer protocols, said protocol identifier (PROT_ID_3) being associated with said quality of service desired and with the network layer protocol of datagrams (INFO) encapsulated in packets (PPP4) of said Point-to-Point Protocol packet stream (PPP_str1); and
b. means to insert said protocol identifier (PROT_ID_3) in a protocol identification field of each packet (PPP4) of said Point-to-Point Protocol packet stream (PPP_str1).

5. Point-to-Point Protocol aware network termination (H1) according to claim 1,
CHARACTERISED IN THAT said network termination (H1) further comprises type-of-service negotiating means to negotiate a way to mark said packets of said Point-to-Point Protocol packet stream (PPP_str1) with type-of-service information indicative for a quality of service desired for transfer of said Point-to-Point Protocol packet stream (PPP_str1).

6. Point-to-Point Protocol aware network termination (H1) according to claim 2 and claim 5,
CHARACTERISED IN THAT said type-of-service negotiating means comprises:
a. checking means to check whether said first reserved protocol identifier (PACT_ID_1) is known by all Point-to-Point aware network elements (NAS) where said Point-to-Point Protocol stream (PPP_str1) passes through; and
b. activation means to activate said packet marking means, responsive to said checking means.

7. Point-to-Point Protocol aware network termination (H1) according to claim 3 and claim 5,
CHARACTERISED IN THAT said type-of-service negotiating means comprises:
a. checking means to check whether an option of handling said type-of-service field is supported by all Point-to-Point aware network elements (NAS) where said Point-to-Point Protocol stream (PPP_str1) passes through; and
b. activation means to activate said packet marking means, responsive to said checking means.

8. Point-to-Point Protocol aware network termination (H1) according to claim 4 and claim 5,
CHARACTERISED IN THAT said type-of-service negotiating means comprises:
a. checking means to check whether said predefined set of protocol identifiers is known by all Point-to-Point aware network elements (NAS) where said Point-to-Point Protocol stream (PPP_str1) passes through; and
b. activation means to activate said packet marking means, responsive to said checking means.

9. Point-to-Point Protocol aware multiplexing network element (NAS) able to multiplex a plurality of Point-to-Point Protocol packet streams (PPP_str1, PPP_str2, PPP_str3),
CHARACTERISED IN THAT said multiplexing network element (NAS) comprises:
a. packet monitoring means to retrieve from each packet a type-of-service indication indicative for a quality of service desired for transfer of a Point-to-Point Protocol packet stream (PPP_str1, PPP_str2, PPP_str3) where said packet belongs to;
b. means to associate different priorities with different type-of-service indications; and
c. means to schedule transport of packets of said Point-to-Point Protocol packet streams (PPP_str1, PPP_str2, PPP_str3) based on said priorities.

10. Point-to-Point Protocol aware multiplexing network element (NAS) according to claim 9,
CHARACTERISED IN THAT said packet monitoring means is adapted to retrieve said type-of-service indication (TOS) from a type-of-service field as defined in claim 2.

11. Point-to-Point Protocol aware multiplexing network element (NAS) according to claim 9,
CHARACTERISED IN THAT said packet monitoring means is adapted to retrieve said type-of-service indication (TOS) from a type-of-service field as defined in claim 3.

12. Point-to-Point Protocol aware multiplexing network element (NAS) according to claim 9,
CHARACTERISED IN THAT said packet monitoring means is adapted to retrieve said type-of-service indication (PACT_ID_3) from a protocol identification field as defined in claim 4.

13. Method for service differentiation in a Point-to-Point Protocol network (ACCESS NETWORK),
CHARACTERISED IN THAT packets of Point-to-Point Protocol packet streams (PPP_str1, PPP_str2, PPP_str3) are each marked with a type-of-service indication indicative for a quality of service desired for transfer of said Point-to-Point Protocol packet streams (PPP_str1, PPP_str2, PPP_str3), and in that said Point-to-Point Protocol packet streams (PPP_str1, PPP_str2, PPP_str3) are multiplexed based on priorities associated with said type-of-service indication.
